# EUROPEAN PATENT SPECIFICATION

(11) **EP 3 973 786 B1**
(45) Date of publication and mention of the grant of the patent: **31.05.2023**
(21) Application number: 20306080.1
(22) Date of filing: 23.09.2020
(51) Int. Cl.: A23J 3/14, A23J 3/22, A23L 33/185

(54) **PROCESS FOR PREPARING A JUICY AND TENDER PLANT-BASED MEAT ANALOGUE**
VERFAHREN ZUR HERSTELLUNG EINES SAFTIGEN UND ZARTEN PFLANZENBASIERTEN FLEISCHANALOGS
PROCÉDÉ DE PRÉPARATION D'UN ANALOGUE DE VIANDE JUTEUX ET TENDRE À BASE DE PLANTES

(43) Date of publication of application: 30.03.2022
(73) Proprietor: Les Nouveaux Fermiers, 75009 Paris (FR)
(72) Inventor: LEGAY, Guillaume, 91640 Fontenay-Lès-Briis (FR)
(74) Representative: Lavoix

(56) References cited:
- EP-A1- 3 508 067
- WO-A1-2020/089445
- WO-A2-2016/035058
- US-A1- 2006 035 003

## Description

The present invention concerns the preparation of plant-based meat analogue.

Increasing concerns about wellbeing in ethical, social, health, and ecological aspects have resulted in an increase in the number of vegetarians. The replacement of meat protein with plant protein has therefore become an important research topic. However, meat analogues are generally different from meat in terms of mouthfeel, texture, taste, and flavour.

Meat analogues are primarily vegetable based food products that contain proteins made from pulses (mainly soy), cereal protein, or fungi. There was a sharp increase in the consumption of these products around 2001 after a number of food safety crises (B.S.E., food and mouth disease) in the meat sector. Soon after that period, the growth in the market stabilised.

The difficulty with establishing a broad acceptance of meat analogues is probably related to several aspects. Firstly, these types of products are relatively new. Secondly, a large difference in the perceived product quality of meat and meat analogues is likely to play an important role. Both experience quality attributes such as convenience, freshness, and sensory characteristics, and credence quality attributes (e.g. healthiness) are important for consumer's buying behaviour of meat. Meat is especially appreciated for its sensory properties, its unique taste and texture. A few studies investigated consumers' evaluation of both meat and meat analogues and found that meat substitutes stayed behind in overall evaluation and in particular the sensory appreciation.

EP3508067 discloses a method for producing a vegetable meat substitute and US2006035003 discloses a process for preparing a soy protein containing food product.

There is thus still an important need for meat analogues displaying sensory attributes such as chewing feeling very similar to "real" meat, in particular having a very juicy and tender texture.

The present invention meets this need.

The present invention arises from the unexpected finding by the invention that, by mincing only a part of a plant-based meat analogue raw mix (typically obtained by mixing a batch comprising plant textured proteins and a batch comprising an emulsion of texturing and binding agents), it was possible to modulate the juicy and tender texture of the meat analogue, in particular to make it very similar to the one of "real" meat, without using any animal ingredient.

Furthermore, the inventors demonstrated that the batch comprising plant textured proteins was of particularly high quality, when said plant textured proteins were hydrated under conditions alternating low agitation phases and rest phases.

Moreover, the inventors found unexpectedly that it was possible to prepare the emulsion of the second batch using a grinder, rather than a cutter, which can be very practical for industrials in the field of the meat analogue, which are not equipped with cutter devices.

The present invention thus concerns a method for manufacturing plant-based meat analogue products, said method comprising:
a) preparing a batch (P) of plant textured proteins by hydrating said plant textured proteins with an aqueous solution,
b) preparing a batch (E) of texturing emulsion by
   b1) dispersing in oil a mixture comprising a texturing agent and at least one other binding agent,
   b2) mixing said dispersion with an aqueous solution under low agitation, and
   b3) mixing the mixture obtained at step b2) under high shear conditions, thereby obtaining an emulsion,
c) mixing said batches (P) and (E) under low agitation,
d) separating the mixture obtained at step c) into 2 parts and mincing only one part of said mixture,
e) mixing the non-minced part and the minced part obtained at step d), and
f) forming plant-based meat analogue products from the mixture obtained at step e).

In a particular embodiment, said hydration is performed under conditions alternating a low agitation phase and a rest phase.

In still a particular embodiment, the mixing under high shear in step b3) is performed in a grinder.

### Detailed description of the invention

### Preparation of batch (P)

Step a) of the method of the invention consists in preparing a batch (P) of plant textured proteins by hydrating said plant textured proteins with an aqueous solution.

By "plant textured proteins", also called "textured vegetable protein" is meant herein a defatted plant flour product, typically a by-product of extracting plant oil. Plant textured proteins are usually made from high (50%) soy protein, soy flour or concentrate, but can also be made from cotton seeds, wheat, peas, fava beans and oats.

Said plant textured proteins are typically obtained by an extrusion process.

Plant textured proteins can typically be extruded into various shapes (chunks, flakes, nuggets, grains, and strips) and sizes. During the extrusion process, the defatted thermoplastic proteins are typically heated to 150-200°C, which denatures them into a fibrous, insoluble, porous network that can soak up as much as three times its weight in liquids.

By "aqueous solution" is meant herein a solution in which the solvent is water.

In a particular embodiment, said aqueous solution is water.

The water can be pure water, tap water, bottled water, deionized water, spring water, natural juice (*i.e*. liquid based extract from a non-animal source such as a plant or any part of a plant), modified natural juice, or a mixture thereof. Thus, the aqueous solution may be water further comprising salts or minerals or both.

In a particular embodiment, said aqueous solution further comprises at least one coloring and/or flavoring agent.

As used herein, the term "coloring agent" refers to a compound that confers a color on a food product.

Examples of suitable coloring agents include artificial colorants, natural colorants, natural extracts or powders (*e.g*. beet root extract or powder, pomegranate fruit extract, cherry extract, carrot extract, red cabbage extract, red seaweed extract), modified natural extracts, natural juices (*e.g*. beet root juice, pomegranate fruit juice, cherry juice, carrot juice, red cabbage juice, red seaweed juice), modified natural juices, erythrosine, fast green FCF, allura red AC, tartazine, sunset yellow FCF, brilliant blue FCF, indigotine, titanium oxide, annatto, anthocyanins. betanins, beta-APE 8 carotenal, beta-carotene, black currant, burnt sugar, canthaxanthin, caramel, carmine/carminic acid, cochineal extract, curcumin, lutein, carotenoids, monascin, paprika, riboflavin, saffron, turmeric, and combinations thereof.

In a particular embodiment, said coloring agent is beet root powder.

As used herein, the term "flavoring agent" refers to a volatile substance that activates aroma receptors in the olfactory system

Examples of flavoring agents include but are not limited to oil soluble flavoring compounds, water soluble flavoring compounds, volatile flavoring compounds, meat-like furans, aldehydes, guaicol, 3-methyl-butanal, methional, 2--acetyl-2-thiazoline, 2-ethyl-3,5-dimethylpyrazine, 2,3-diethyl-5-methylpyrazine, 3-hydroxy-4,5-dimethyl-2(5H)-furanone, 4-hydroxy-2,5-dimethyl-3(2H)-furanone, octen-3-ol, phenyl acetic acid, 2,4-decadienal, ionone beta, trithioacetone, benzyl mercaptan, furfuryl mercaptan, methyl furfuryl disulfide, oil onion, pyrazine, ammonium sulfide, dimethyl sulfide, acetoin, methional, para cresol, phenyl acetaldehyde, isovaleraldehyde, 5-methyl-2-phenyl-5-hexenal, homofuranol, 2-methyl tetrahydrofuran-3-thiol, methyl mercaptan, furaneol, indole, precursor molecules (*i.e*. molecules that can specifically or non-specifically react with each other or other compounds to produce agents that impart or enhance flavors; *e.g*. Maillard reaction precursors), and combinations and derivatives thereof.

In a particular embodiment, said aqueous solution used in step a) has a temperature lower than 10°C, more particularly a temperature lower than 9°C, lower than 8°C, lower than 7°C, lower than 6°C, or lower than 5°C. In still a particular embodiment, said aqueous solution used in step a) has a temperature comprised between 0°C and 10°C, between 1°C and 9°C, between 2°C and 8°C, between 3°C and 7°C, between 3°C and 6°C, between 3°C and 5°C, typically of 4°C.

By "hydrating plant textured proteins" is meant herein making said plant textured proteins absorb water.

Typically, said hydration can be performed by contacting said plant textured proteins with the aqueous solution defined above.

Said contacting may be implemented by immersing said plant textured proteins in said aqueous solution.

As will be understood by the skilled person, the period of time during which said hydration is performed needs to be sufficient to enable said plant textured proteins to absorb the water of the aqueous solution.

In a particular embodiment, said hydration is performed for a period of time comprised between 5 min and 24 hours, in particular between 10 min and 15 hours, between 15 min and 10 hours, between 20 min and 5 hours, between 25 min and 2 hours, between 30 min and 1 hour, between 30 min and 50 min, between 30 min and 45 min, between, 30 min and 40 min or between 30 min and 35 min.

In a particular embodiment; said hydration is performed for a period of time comprised between 15 min and 1h.

The inventors demonstrated that the batch comprising plant textured proteins was of particularly high quality when said plant textured proteins were hydrated under conditions alternating low agitation phases and rest phases.

Accordingly, in a particular embodiment, said hydration is performed under conditions alternating a low agitation phase and a rest phase.

By "rest phase" is meant herein a phase during which the batch of plant textured proteins being hydrated is not agitated, by any means, and is not submitted to any remaining movement due to a prior agitation phase.

In a particular embodiment, one rest period lasts between 1 min and 10 min preferably between 1 min and 5 min.

In a particular embodiment, said low agitation is an agitation inferior to 50 rpm.

In a particular embodiment, one low agitation period lasts between 10 s and 5 min, preferably between 10 s and 1 min.

In a particular embodiment, the first low agitation period lasts between 1 min and 5 min, while the other low agitation period are shorter and last preferably between 10 s and 1 min.

In still a particular embodiment, said low agitation performed in step a) is implemented in a mixing equipment devoid of blades, for example in a paddle mixer.

In a particular embodiment, said hydration comprises between 1 and 10 alternations of low agitation period and rest period, in particular between 1 and 5 alternations of low agitation and rest period.

In still a particular embodiment, one low agitation period lasts between 10 s and 5 min, preferably between 10 s and 1 min and one rest period lasts between 1 min and 10 min, preferably between 1 min and 5 min.

In a particular embodiment, the first low agitation period lasts between 1 min and 5 min and each of the following low agitation periods lasts between 10 s and 1 min, and each rest period lasts between 1 min and 10 mi, preferably between 1 min and 5 min.

In still a particular embodiment, said hydration performed in step a) is implemented in a mixing equipment devoid of blades, for example in a paddle mixer.

### Preparation of batch (E)

Step b) of the method of the invention consists in preparing a batch (E) of texturing emulsion. Said step b) comprises the three following successive steps:
b1) dispersing in oil a mixture comprising a texturing agent and at least one other binding agent,
b2) mixing said dispersion with an aqueous solution under low agitation, and
b3) mixing the mixture obtained at step b2) under high shear conditions, thereby obtaining an emulsion.

### b1) Dispersing step

By "texturing agent" is meant herein a component which increases, modifies and/or enhances the overall texture or mouthfeel of food products. Texturizing agents used herein are suitable for addition to a food product.

Texturing agents typically include thickening agents, gelling agents, stabilizing agents, emulsifying agents and binding agents.

In a particular embodiment, said texturing agent is selected from the group consisting of starches (such as arrowroot, cornstarch, katakuri starch, potato starch, sago, wheat flour, almond flour, tapioca and their starch derivatives), alginin, guar gum, locust bean gum, xanthan gum, collagen, egg whites, agar, carboxymethyl cellulose, methylcellulose, pectin and carrageenan.

In a particular embodiment, said texturing agent is methylcellulose.

By "binding agent" is meant herein any material or substance that holds or draws other materials together to form a cohesive whole mechanically, chemically, by adhesion or cohesion.

Examples of suitable binding agents include but are not limited to starches, in particular native or modified starches (e.g., starches from grains, starches from tuber, potato starch, sweet potato starch, corn starch, waxy corn starch, tapioca starch, tapioca, arrowroot starch, taro starch, pea starch, chickpea starch, rice starch, waxy rice starch, lentil starch, barley starch, sorghum starch, wheat starch, and physical or chemical modifications thereof (including *e.g*. pre-gelatinized starch, acetylated starch, phosphate bonded starch, carboxymethylated starch, hydroxypropylated starch)), protein isolates (*e.g*. from potato, soy, pea, lentil, chickpea, lupin, oat, canola, wheat), hydrolyzed protein isolates (*e.g*, hydrolyzed pea protein isolate, hydrolyzed soy protein isolate), protein concentrates (*e.g*. from algae, lentil, pea, soy, chickpea, rice, hemp, fava bean, pigeon pea, cowpea, vital wheat gluten), and emulsifying functional proteins (*e.g*. from algae, potato, soy, pea, lentil, chickpea, lupin, oat, canola, wheat).

In a particular embodiment, said at least one binding agent is selected from the group consisting of starches and emulsifying functional proteins.

In the context of the invention, the mixture comprising a texturing agent and at least one binding agent (which is not the texturing agent), is dispersed in oil.

By "oil" is meant herein any nonpolar chemical substance that is a viscous liquid at ambient temperatures and is both hydrophobic and lipophilic.

Suitable examples of oils include but are not limited to microbial oil, plant oil, algal oil, fungal oil, marine oil, almond oil, aloe vera oil, apricot kerne oil, avocado oil, baobab oil, calendula oil, canola oil, corn oil, cottonseed oil, evening primrose oil, grape oil, grape seed oil, hazelnut oil, jojoba oil, linseed oil, macadamia oil, natural oils, neem oil, nonhydrogenated oils, olive oil, palm oil, coconut oil, partially hydrogenated oils, peanut oil, rapeseed oil, sesame oil, soybean oil, sunflower oil, synthetic oils, vegetable oil, fatty acids suitable for human consumption (*e.g*. oils that are liquid at ambient temperature like avocado, mustard, coconut, cottonseed, fish, flax, seed, grape, olive, palm. peanut, rapeseed, safflower, sesame. soybean, sunflower; oils that are solid at ambient temperature like chocolate fat), sole fats (*e.g*. palm oil, palm kernel oil, coconut oil, cocoa butter, shea butter), soft fats (*e.g*. canola oil, soybean oil, sunflower oil, safflower oil, olive oil. nut oils), vegetable oils (*e.g*. from soy bean, corn, cotton seed, rapeseed, rice, peanut, and palm), and derivatives thereof.

### b2) Initial mixing step under low agitation

By "aqueous solution" is meant herein a solution in which the solvent is water.

In a particular embodiment, said aqueous solution is water.

The water can be pure water, tap water, bottled water, deionized water, spring water, natural juice (*i.e*. liquid based extract from a non-animal source such as a plant or any part of a plant), modified natural juice, or a mixture thereof. Thus, the aqueous solution may be water further comprising salts or minerals or both.

In the context of the invention, said mixing is performed under low agitation, in particular under low shear conditions.

In a particular embodiment, said mixing is performed under an agitation inferior to 90 rpm, in particular under an agitation comprised between 10 rpm and 90 rpm, more particularly between 20 rpm and 90 rpm, between 30 rpm and 80 rpm, between 40 rpm and 70 rpm, or between 50 rpm and 60 rpm.

### b3) Mixing step under high shear conditions

Once a homogeneous mixture is obtained at step b), the mixture is mixed under high shear conditions, thereby obtaining an emulsion.

The term "emulsion" as used herein refers to a mixture of immiscible liquids in which one or more liquids ("dispersed phase(s)") are dispersed as fine droplets in another liquid ("continuous phase").

By "high shear conditions" is meant herein turbulent mixing conditions sufficient to emulsify the mixture.

The inventors found that it was possible to prepare the emulsion of the second batch using a grinder, rather than a cutter, which can be very practical for industrials in the field of the meat analogue, which are not equipped with cutter devices.

Accordingly, in a particular embodiment, the mixing under high shear in step b3) is performed in a grinder. Typically said grinder is configured to maximize the shear conditions. For example, the cutters and grids are stacked, typically alternating a 6-blade cutter, a grid with 6 mm diameter holes, a second 6-blade cutter, and a grid with 3 mm diameter holes.

Preferably, said mixing at step b3) is performed by passing the mixture through the grinder from 1 to 3 times.

In a particular embodiment, the temperature of the emulsion obtained at the end of step b3) is lower than 6°C, more particularly lower than 5°C, still particularly lower than 4°C.

As will be understood by the skilled person, steps a) and b) of the method of the invention may be implemented successively in any order (a) and then b), or b) and then a)), or simultaneously in parallels.

Said batches can thus be stored, typically at a temperature lower than 10°C, for example at a temperature lower than 6°C, more particularly at a temperature lower than 4°C, before implementing step c) of the method of the invention.

### Mixing of batches (P) and (E)

Step c) of the method of the invention consists in mixing said batches (P) and (E) under low agitation.

In a particular embodiment, said batch (P) represents from 40% to 80% of the total weight of the mixture, preferably from 40% to 70%, still preferably from 45% to 60%, from 45% to 55%, or 50% of total weight of the mixture.

In a particular embodiment, said batch (E) represents from 20% to 60% of the total weight of the mixture, preferably from 30% to 60%, still preferably from 40% to 60%, from 45% to 55%, or 45% or 50% of total weight of the mixture.

In the context of the invention, said mixing at step c) is performed under low agitation, in particular under low shear conditions.

In a particular embodiment, said mixing is performed under an agitation inferior to 70 rpm, for example an agitation of 50 rpm or 60 rpm.

The mixture obtained at step c) can then be submitted to optional treatment steps before the forming step d), such as total or partial mincing, or storing.

### Mincing step

The inventors demonstrated that, by mincing only a part of the mixture obtained at step c), it was possible to modulate the juicy and tender texture of the meat analogue, in particular to make it very similar to the one of "real" meat, without using any animal ingredient.

Therefore, step d) of the method of the invention consists in separating the mixture obtained at step c) into 2 parts and mincing only one part of said mixture.

The proportion of the minced part can be modified according to the level of juiciness and tenderness desired for the final product.

In a particular embodiment, the minced part in step d) represents between 0% and 100% by weight of the weight of the total mixture, preferably between 0% and 50% by weight of the weight of the total mixture, for example between 10% and 50%, between 20% and 50%, between 30% and 50% or between 40% and 50%.

Said mincing step can be implemented using any mincing device conventional used for mincing meat.

In a particular embodiment, mincing is performed at step d) using a mincing machine with grids displaying holes having a diameter comprised between 3 and 8 mm, and cutters bearing between 4 to 6 blades.

Once a part of the mixture is minced, the non-minced part and the minced part obtained at step d) are mixed.

Said mixing in step e) can be implemented using any well-known mixing device, preferably under low agitation. Said mixing is preferably performed under an agitation lower than 50 rpm, preferably between 2 and 10 min, more preferably between 2 and 5 min.

### Forming of meat analogue products

The method of the invention enables producing a meat analogue product of any form.

The term "meat analogue product" as used herein refers to a food product that is not derived from an animal but has structure, texture, and/or other properties comparable to those of animal meat. The term refers to uncooked, cooking and cooked meat analogue product.

More particularly, the meat analogue product produced by the method of the invention displays a chewing feeling similar to the one obtained with a meat product.

Step f) of the method of the invention consists in forming said meat analogue product in the desired form.

The plant-based meat analogue products formed in the context of the invention can for example be plant-based steaks, plant-based meat analogue balls or minced plant-based meat analogue.

As will be understood by the skilled person, the device used for forming said meat analogue product at step d) will depend on the particular form that one wants to obtain.

As clearly apparent from the present description, one advantage of the method of the invention is to obtain a plant-based meat analogue product, in particular giving a chewing feeling similar to one of "real" meat, without using meat.

Accordingly, in a particularly preferred embodiment, the method of the invention does not use any animal ingredient.

### Optional additional steps

After the forming step, the method of the invention may comprise additional steps of treatment of said plant-based meat analogue product.

In a particular embodiment, the method of the invention further comprises a step g) of freezing the plant-based meat analogue products formed at step f).

Said freezing step can be implemented by any technique well-known from the skilled person. For example, said plant-based meat analogue can be frozen in a freezing tunnel, typically at a temperature lower than -18°C.

In a particular embodiment, the method of the invention further comprises a step h) of packaging said frozen plant-based meat analogue products under modified atmosphere.

By "modified atmosphere" is meant herein the practice of modifying the composition of the internal atmosphere of a package in order to improve the shelf life, in particular by reducing the level of oxygen and replacing it with other gases.

The present invention will be further exemplified by the example below.

### Example

The present example shows a typical implementation of the method of the invention for producing plant-based steaks.

All along the process, all mixtures remain cold (approximately 4°C). In that purpose, all the ingredients are stored at 4°C, and used at that temperature.

### A. Batch 1 : hydration of the textured proteins

The key ingredient of the method of the invention is plant textured proteins. Proteins are textured thank to an extrusion process. By hydrating the textured proteins, typical beef mouthfeel can be mimicked.

First step of the making process is to prepare the marinade for textured proteins hydration. Beetroot powder (food coloring) and flavors are dispersed in cold water (4°C) thank to a blender for 1 min.

Then, textured proteins and marinade are added into a mixing equipment (e.g. paddles mixer, a mixing equipment without blades), and hydrated by alternating low agitation phases and rest phases:
1. 5 min under low agitation
2. 4 min 30 s without agitation
3. 30 s under low agitation
4. Steps 2 & 3 repeated 5 times, for a total hydration time of 30 min

Alternating low agitation phases and rest phases is particularly advantageous to get homogeneous hydrated proteins, while avoiding shredding them.

If necessary, hydrated textured proteins (batch 1) can be store at 4°C before being mixed with the emulsion batch.

### B. Batch 2 : emulsion making

The preparation of the emulsion batch is divided into 2 different parts.

First, all powdered ingredients (texturing and binding ingredients (i.e. methylcellulose, potato starch, protein isolate), beetroot powder) and sunflower oil are added into a mixing equipment. Then, powdered ingredients are dispersed in the oil under low agitation (60 rpm). As soon as a homogeneous mixture is formed, ice, then water, are added to the mixing equipment. The low agitation is kept until a homogeneous mixture is formed.

In a second time, the final mixture is added into a grinder, and mixed under high shear conditions, thereby obtaining an emulsion. To do so, and to maximize the shear conditions provided by the grinder, the configuration described below is used:
- Output configuration : cutters and grids are stacked, typically alternating a 6-blades cutter, a grid with 6 mm diameter holes, a second 6-blades cutter, and a grid with 3 mm diameter holes
- The mixture is passed through the grinder 2 times

If necessary, emulsion (batch 2) can be stored at 4°C before being mixed with batch 1.

### C. Mincing of the final dough

In a mixing equipment (e.g. paddles mixer, a mixing equipment without blades), batch 1 and batch 2 are mixed under low agitation until a homogeneous dough is formed.

A part of the dough (e.g. 50%) is added to a mincing equipment, and minced through a grid with 4 mm diameter holes.

Then, the minced dough is re-added in the mixing equipment, and mixed with the rest of the dough (which was not grinded).

This mincing step allows modulating the texture of the final patty, by providing it juiciness and tenderness.

### D. End of the process

Patties of 113 g, 90 mm diameter and 20 to 24 mm height are formed thanks to a forming machine.

Patties are frozen right after the forming thank to a freezing tunnel (temperature of the equipment is close to -24°C).

Then, patties are packed under modified atmosphere in order to improve their shelf life. If necessary, they can be stored (for a maximum of 6 months) at freezing temperature to be packed later.

## Claims

1. Method for manufacturing plant-based meat analogue products, said method comprising:
a) preparing a batch (P) of plant textured proteins by hydrating said plant textured proteins with an aqueous solution,
b) preparing a batch (E) of texturing emulsion by
b1) dispersing in oil a mixture comprising a texturing agent and at least one other binding agent,
b2) mixing said dispersion with an aqueous solution under low agitation, and
b3) mixing the mixture obtained at step b2) under high shear conditions, thereby obtaining an emulsion,
c) mixing said batches (P) and (E) under low agitation,
d) separating the mixture obtained at step c) into 2 parts and mincing only one part of said mixture,
e) mixing the non-minced part and the minced part obtained at step d), and
f) forming plant-based meat analogue products from the mixture obtained at step e).

2. The method according to claim 1, further comprising a step g) of freezing the plant-based meat analogue products formed at step f).

3. The method according to claim 1 or 2, wherein said hydration is performed under conditions alternating a low agitation phase and a rest phase.

4. The method according to claim 3, wherein said hydration comprises between 1 and 10 alternations of low agitation period and rest period.

5. The method according to claim 3 or 4, wherein one low agitation period lasts between 10 s and 5 min and one rest period lasts between 1 min and 10 min.

6. The method according to any one of claims 1 to 5, wherein said low agitation performed in step a) is implemented in mixing equipment devoid of blades.

7. The method according to any one of claims 1 to 6, wherein said aqueous solution used in step a) has a temperature lower than 10°C.

8. The method according to any one of claims 1 to 7, wherein said texturing agent is methylcellulose.

9. The method according to any one of claims 1 to 8, wherein said at least one binding agent is selected from the group consisting of starch and emulsifying functional proteins.

10. The method according to any one of claims 1 to 9, wherein the mixing under high shear in step b3) is performed in a grinder.

11. The method according to claim 10, wherein said mixing at step b3) is performed by passing the mixture through the grinder 1 to 3 times.

12. The method according to any one of claims 1 to 11, wherein the minced part in step d) represents between 0% and 100% by weight of the weight of the total mixture.

13. The method according to any one of claims 1 to 12, wherein mincing is performed at step d) using a mincing machine with a grid displaying holes having a diameter comprised between 3 and 8 mm.

14. The method according to any one of claims 1 to 13, wherein the plant-based meat analogue product is selected from plant-based steaks, plant-based meat analogue balls and minced plant-based meat analogue.

15. The method according to any one of claims 1 to 14, wherein said method does not use any animal ingredient.

## Patentansprüche

1. Verfahren zum Herstellen von Fleischersatzprodukten auf pflanzlicher Basis, das Verfahren umfassend:
a) Herstellen einer Charge (P) von pflanzlichen texturierten Proteinen durch Hydratisieren der pflanzlichen texturierten Proteine mit einer wässrigen Lösung,
b) Herstellen einer Charge (E) einer Texturierungsemulsion durch
b1) Dispergieren eines Gemischs, umfassend ein Texturierungsmittel und mindestens ein anderes Bindemittel, in Öl,
b2) Mischen der Dispersion mit einer wässrigen Lösung unter geringem Rühren, und
b3) Mischen des in Schritt b2) erlangten Gemischs unter hohen Scherkräften, wodurch eine Emulsion erlangt wird,
c) Mischen der Chargen (P) und (E) unter geringem Rühren,
d) Trennen des in Schritt c) erlangten Gemischs in zwei Teile und Zerkleinern nur eines Teils des Gemischs,
e) Mischen des nicht zerkleinerten Teils und des in Schritt d) erlangten zerkleinerten Teils, und
f) Bilden von Fleischersatzprodukten auf pflanzlicher Basis aus dem in Schritt e) erlangten Gemisch.

2. Verfahren nach Anspruch 1, ferner umfassend einen Schritt g) eines Einfrierens der in Schritt f) gebildeten Fleischersatzprodukte auf pflanzlicher Basis.

3. Verfahren nach Anspruch 1 oder 2, wobei die Hydratation unter Bedingungen ausgeführt wird, bei denen eine Phase geringer Bewegung und eine Ruhephase abgewechselt werden.

4. Verfahren nach Anspruch 3, wobei die Hydratation zwischen 1 und 10 Wechsel zwischen einer Periode geringer Bewegung und einer Ruheperiode umfasst.

5. Verfahren nach Anspruch 3 oder 4, wobei eine Periode geringer Bewegung zwischen 10 Sekunden und 5 Minuten und eine Ruheperiode zwischen 1 Minute und 10 Minuten dauert.

6. Verfahren nach einem der Ansprüche 1 bis 5, wobei das in Schritt a) ausgeführte geringe Rühren in einer Mischanlage ohne Schaufeln implementiert ist.

7. Verfahren nach einem der Ansprüche 1 bis 6, wobei die in Schritt a) verwendete wässrige Lösung eine Temperatur von weniger als 10 °C aufweist.

8. Verfahren nach einem der Ansprüche 1 bis 7, wobei das Texturierungsmittel Methylcellulose ist.

9. Verfahren nach einem der Ansprüche 1 bis 8, wobei das mindestens eine Bindemittel ausgewählt ist aus der Gruppe, bestehend aus Stärke und emulgierenden funktionellen Proteinen.

10. Verfahren nach einem der Ansprüche 1 bis 9, wobei das Mischen unter hoher Scherung in Schritt b3) in einer Mühle ausgeführt wird.

11. Verfahren nach Anspruch 10, wobei das Mischen in Schritt b3) ausgeführt wird, indem das Gemisch 1 bis 3 Mal durch die Mühle geleitet wird.

12. Verfahren nach einem der Ansprüche 1 bis 11, wobei der zerkleinerte Teil in Schritt d) zwischen 0 und 100 Gewichtsprozent des Gewichts des Gesamtgemischs ausmacht.

13. Verfahren nach einem der Ansprüche 1 bis 12, wobei das Zerkleinern in Schritt d) unter Verwendung einer Zerkleinerungsmaschine mit einem Gitter ausgeführt wird, das Löcher mit einem Durchmesser zwischen 3 und 8 mm aufweist.

14. Verfahren nach einem der Ansprüche 1 bis 13, wobei das Fleischersatzprodukt auf pflanzlicher Basis ausgewählt ist aus Steaks auf pflanzlicher Basis, Fleischersatzbällchen auf pflanzlicher Basis und gehacktem Fleischersatz auf pflanzlicher Basis.

15. Verfahren nach einem der Ansprüche 1 bis 14, wobei das Verfahren keine Bestandteile tierischen Ursprungs verwendet.

## Revendications

1. Procédé de fabrication de produits analogues à la viande à base de plantes, comprenant :
a) la préparation d'un lot (P) de protéines végétales texturées en hydratant lesdites protéines végétales texturées à l'aide d'une solution aqueuse,
b) la préparation d'un lot (E) d'émulsion de texturation en
b1) dispersant dans l'huile un mélange comprenant un agent de texture et au moins un autre liant,
b2) mélangeant ladite dispersion avec une solution aqueuse sous faible agitation, et
b3) mélangeant le mélange obtenu à l'étape b2) dans des conditions de cisaillement élevé, ce qui permet d'obtenir une émulsion,
c) le mélange desdits lots (P) et (E) sous faible agitation,
d) la séparation du mélange obtenu à l'étape c) en 2 parties et le hachage d'une seule partie dudit mélange,
e) le mélange de la partie non hachée et la partie hachée obtenue à l'étape d), et
f) la formation de produits analogues à la viande à base de plantes à partir du mélange obtenu à l'étape e).

2. Procédé selon la revendication 1, comprenant en outre une étape g) de congélation des produits analogues à la viande à base de plantes formés à l'étape f).

3. Procédé selon la revendication 1 ou 2, dans lequel ladite hydratation est réalisée dans des conditions alternant une phase de faible agitation et une phase de repos.

4. Procédé selon la revendication 3, dans lequel ladite hydratation comprend entre 1 et 10 alternances de période de faible agitation et de période de repos.

5. Procédé selon la revendication 3 ou 4, dans lequel une période de faible agitation dure entre 10 s et 5 min et une période de repos dure entre 1 min et 10 min.

6. Procédé selon l'une quelconque des revendications 1 à 5, dans lequel ladite faible agitation réalisée à l'étape a) est mise en oeuvre dans un équipement de mélange dépourvu de pales.

7. Procédé selon l'une quelconque des revendications 1 à 6, dans lequel la solution aqueuse utilisée à l'étape a) a une température inférieure à 10 °C.

8. Procédé selon l'une quelconque des revendications 1 à 7, dans lequel l'agent de texture est la méthylcellulose.

9. Procédé selon l'une quelconque des revendications 1 à 8, dans lequel ledit au moins un liant est choisi dans le groupe constitué par l'amidon et les protéines fonctionnelles émulsifiantes.

10. Procédé selon l'une quelconque des revendications 1 à 9, dans lequel le mélange sous cisaillement élevé à l'étape b3) est réalisé dans un broyeur.

11. Procédé selon la revendication 10, dans lequel ledit mélange à l'étape b3) est effectué en faisant passer le mélange dans le broyeur de 1 à 3 fois.

12. Procédé selon l'une quelconque des revendications 1 à 11, dans lequel la partie hachée à l'étape d) représente entre 0 % et 100 % en poids du poids du mélange total.

13. Procédé selon l'une quelconque des revendications 1 à 12, dans lequel le hachage est effectué à l'étape d) à l'aide d'une machine à hacher munie d'une grille présentant des trous d'un diamètre compris entre 3 et 8 mm.

14. Procédé selon l'une quelconque des revendications 1 à 13, dans lequel le produit analogue à la viande à base de plantes est choisi parmi les steaks à base de plantes, les boulettes analogues à la viande à base de plantes et un analogue à la viande à base de plantes haché.

15. Procédé selon l'une quelconque des revendications 1 à 14, dans lequel ledit procédé n'utilise aucun ingrédient animal.
